(19) Europäisches Patentamt
European Patent Office
Office européen des brevets

(11) Publication number: 0 487 868 A2

(12) EUROPEAN PATENT APPLICATION

(21) Application number: 91117096.7

(51) Int. Cl.5: B32B 5/28

(22) Date of filing: 08.10.91

(30) Priority: 30.11.90 US 621154
08.02.91 US 652697

(43) Date of publication of application:
03.06.92 Bulletin 92/23

(84) Designated Contracting States:
AT BE CH DE DK ES FR GB IT LI NL SE

(71) Applicant: AMERICAN CYANAMID COMPANY
1937 West Main Street P.O. Box 60
Stamford Connecticut 06904-0060(US)

(72) Inventor: Parkyn, Adrian Timothy
10 West Park
Redruth Cornwall(GB)
Inventor: Belk, Christopher James
Bellcroft, Valley Road
Ffrith, Clwyd LL11 5LP(GB)

(74) Representative: Wächtershäuser, Günter, Dr.
Tal 29
W-8000 München 2(DE)

(54) **Composite tooling.**

(57) A composite tooling article is disclosed which exhibits improved resistance to impact damage and improved vacuum integrity during thermal cycling.

EP 0 487 868 A2

## FIELD OF THE INVENTION

This invention relates to improved composite tooling articles comprising interleafed fiber resin matrix materials. More particularly, the invention relates to improved composite tooling articles which exhibit improved resistance to impact damage and retention of vacuum integrity which is necessary for the continued utility of such tooling articles.

## CROSS REFERENCE TO RELATED APPLICATIONS

This is a continuation-in-part application of U.S.S.N. 07/621,154, filed on November 30, 1990.

## BACKGROUND OF THE INVENTION

Numerous vacuum and pressure molded articles are today produced through the use of fiber reinforced composite molding tools.

Current fiber reinforced composite molding tools are fabricated from multiple layers of fabric and/or unidirectional collimated fiber tows. These fibers are impregnated with organic resin(s) which bind the fibers and act as a medium transferring stress between the fibers. The resins currently utilized to produce prepregs or wet lay up fabric used in the fabrication of such tooling are typically low viscosity epoxy resins which form brittle polymers upon curing. For example, U.S. Patent No. 4,859,528 discloses such a fabrication.

Due to such brittleness, tooling made therefrom is therefore susceptible to impact damage during tool handling or release of a molded component therefrom. This damage may not be of major proportions and may, in fact, be microscopic. However, under the thermal and pressure cycling encountered in the use of the tooling, propagation of the cracks in the damaged area will occur. When a crack propagates through the thickness of the tool, the ability of the tooling to maintain a vacuum will be severely reduced or lost entirely. The tooling must then be repaired or replaced as it is no longer useful in the production of vacuum or autoclaved molded articles or resin transfer or resin reaction injection molded items using composite tooling.

## SUMMARY OF THE INVENTION

It has now been discovered that fiber reinforced composite molding tools comprising layers of filament reinforced thermosetting resin, called fiber resin matrix layers, and an interleaf layer, exhibited greatly improved resistance to propagation of cracks or other damage to the tool, thereby reducing instances of vacuum loss in the tool and prolonging its useful service life.

Accordingly, it is an object of the present invention to provide an interleafed composite tooling having greatly improved resistance to impact-induced damage, while maintaining satisfactory mechanical properties over a wide range of temperature and pressure conditions. This and other objects are accomplished herein by a composite molding tool comprising;

(A) fiber reinforced resin matrix layers comprising (i) high strength reinforcing filaments, preferably about 40%-70% by weight and (ii) a thermosetting resin composition, preferably about 30%-60% by weight, coating said filaments, and

(B) at least one discrete interleaf layer interposed between fiber resin matrix layers.

## DESCRIPTION OF THE PREFERRED EMBODIMENTS

The dynamic relationship between the fiber resin matrix component and the interleaf layer component of the present invention is complex. However, in general, the interleaf layer provides toughness, i.e., high impact strength, to the composite at all temperatures, while the matrix resin acts to bond the reinforcement and interleaf and is likewise highly resistant to the effects of changes in temperature. The interleaf layer(s) are designed to protect the fiber matrix layers by absorbing damaging forces before they reach levels above the load bearing capability of the fiber resin matrix. When subjected to shear forces, for instance, the interleaf materials suitable for the purposes herein show high elongation so that the interleaf resin layer will flex and absorb the energy of the shear load as it approaches a level at which the fiber resin matrix will normally fail. If impact loads reach such levels that the resin cracks, the high strain capabilities of the interleaf layer help to maintain the integrity of the structure by increasing the energy required to propagate the cracks through the tool. Similarly, crack propagation, after damage during thermal cycling is restricted.

By selecting the components to provide this sort of interprotective relationship, high performance tooling composites can be achieved.

The composite tooling in accordance with the present invention may be produced through the use of wet lay up, hot melt or solvent impregnation of a fabric or tape. These processes are well known in the production of composite articles. Examples of solvent impregnation are contained herein.

The interleaf layer may be composed of a sheet of thermoplastic or thermosetting resin. Resins comprising blends of thermoplastic and thermosetting resins are also useful. Examples of resins useful in the present invention as interleaf layers include elastomer-modified epoxies, polysulphones, polyetherimides, polyacrylates, polyimides and polyether sulphones. Preferred are polyethersulphone and polyimide resins. Especially preferred is the use of Upilex-R\ (UBE) film which is a polyimide resin. The interleaf material is then laminated with the fiber matrix through pressure rollers. The interleaf layer(s) should be employed in a thickness sufficient to provide the vacuum retention benefits of the present invention yet no greater than that beyond which the thickness of the tool becomes unacceptable. Generally, these thickness range from about 5 to about 100 microns. Preferably, the interleaf layer ranges in thickness from about 10 to about 50 microns. Most preferably, the interleaf layer ranges in thickness from about 10 to about 30 microns.

When manufacturing composite tooling employed in molding applications, allowance for the passage of air and/or solvent from the molded tool being produced is needed. Therefore a solid, impermeable interleaf layer is not desirable, though this would still be useful in this application. Instead, sufficient apertures are preferably provided therein to permit for the escape of solvent from the molded tool. Such apertures may be provided, such as through the use of spiked roller (not shown) which perforates the interleaf layer prior to its consolidation within the laminate structure. Although it is of course understood that a relationship exists between the number of apertures and their individual size, such perforations should preferably be provided that aperatures are present in numbers ranging from about 0 to about 10 per square inch of interleaf layer. The size of such perforations are not critical although they should not be so large as to effect the structural integrity of the tooling. Preferably, they should range in size from about 0.1 mm to about 1.0 mm.

To aid in its adhesion to the fiber resin matrix, the interleaf layer should preferably be coated with a thin film of the resin present in the matrix resin prior to laying up of the composite. This may be accomplished by passing the sheet through a bath containing a relatively low solids-containing solution of said resin system (e.g. 20-25% by weight) and then drying off the solvent present upon the film.

The reinforcing filaments useful in the present invention include, but are not limited to, filaments comprised of glass, carbon, silicon carbide, boron, aramid, polyester, polyamide, rayon, polybenzimidazole, polybenzothiazole, metal-coated carbon fibers and filaments, or combinations of such filaments. In applications demanding a high strength to weight ratio or shear strength carbon fibers, polyaramid filaments or metal-plated graphite filaments, e.g. nickel plated carbon fibers.

Thermosetting resin compositions potentially useful as the matrix resin in the present invention include epoxy, vinyl esters, polyesters, polyimide, bis-maleimide, acetylene-terminated resins and cyanate ester resins.

Epoxy resin compositions useful to coat the reinforcing filaments as the matrix resin therefore may suitably comprise epoxy compounds having more than one epoxide group per molecule available for reaction. Such epoxy prepolymers include, but are not limited to, polyfuctional glycidyl ethers of polyvalent phenols, for example pyrocatechol; resorcinol; hydroquinone; 4,4'-dihydroxydiphenyl methane; 4,4'-dihydroxy-3,3'-dimethyldiphenyl methane; 4,4'dihydroxydiphenyl dimethyl methane; 4,4'-dihydroxydiphenyl methyl methane; 4,4'-dihydroxy-diphenyl cyclohexane; 4,4'-dihydroxy 3,3' -dimethyldiphenylpropane;4,4'-dihydroxydiphenylsulphone; or tris-(4-hydroxyphenyl)methane; polyglycidyl ethers of the chlorination and bromination products of the above-mentioned diphenols; polyglycidyl ethers of novolacs (i.e., reaction products of monohydric or polyhydric phenols with aldehydes, formaldehyde in particular, in the presence of acid catalysts); polyglycidyl ethers of diphenols obtained by esterifying 2 mols of the sodium salt of an aromatic hydroxycarboxylic acid with 1 mol of a dihalogenoalkane or dihalogen dialkyl ether (see U.K. No. 1,017,612).

Other suitable compounds include polyepoxy compounds based on aromatic amines and epichlorohydrin, for example N,N'-diglycidylaniline; N,N'-dimethyl-N,N-diglycidyl-4-aminophenyl glycidyl ether; N,N,N','N'-tetraglycidyl-4,4'-diaminodiphenyl methane; and N,N,N',N'-tetraglycidyl-1,3-propylene bis-4-aminobenzoate.

Glycidyl esters and/or epoxycyclohexyl esters or aromatic, aliphatic and cycloaliphatic polycarboxylic acids, for example phthalic acid diglycidyl ester and adipic ester diglycidyl and glycidyl esters of reaction products of 1 mol of an aromatic or cyloaliphatic dicarboxylic acid anhydride and 1 mol of a diol or 1/n mol

of a polyol with n hydroxyl groups, or hexahydrophthalic acid diglycidyl esters, optionally substituted by methyl groups, are also suitable depending upon the final upper use temperature of the tool application.

Triglycidyl isocyanurate; and polyglycidyl thioethers of polyvalent thiols, for example of bis mercaptomethylbenzene; and diglycidyltrimethylene sulphone, are also suitable.

The epoxy resin composition will also include a curing agent and catalysts for the epoxy resin. Such curing agents and catalysts are well known to those skilled in the art, and preferred curing agents for the purposes herein well be diamines, including, but not limited to, diaminodiphenyl sulphone, dicyandiamide, diaminodiphenyl methane, phenylenediamine, and catalysts such as boron trifluoride-amine complexes and imidazoles.

The amount of curing agent necessary for a particular application can be readily determined by persons skilled in the art and will vary according to the precise makeup of the resin composition, the curing conditions desired and other factors. However, by way of illustration, whereas diamine curing agent is employed, from about 20 to 40 weight percent, most preferably about 27 to 31 weight percent, based on the total epoxy resin, has been found suitable to satisfy chemical stoichiometry.

Polyimides potentially useful as matrix resins in the practice of the present invention include the polyimides disclosed in U.S. Pat. Nos. 3,528,950; 3,745,149; 4,233,258; and 4,166,170.

Bis maleimide resins which may be employed as the matrix resin include bis maleimides based on the following monomers;

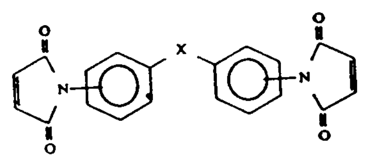

wherein

the isomeric species are meta, and para and X = - $CH_2$-, - O -, - S -, or

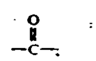

meta or para;

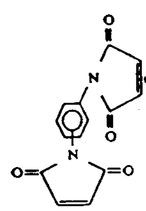

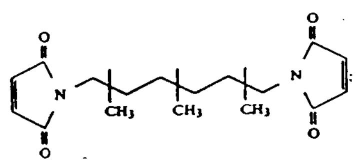

and

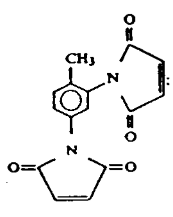

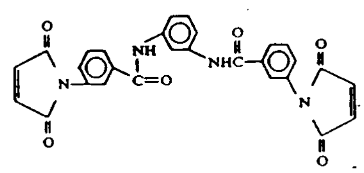

The number of interleaf layers present in the claimed article will vary with the intended application of the tooling article and the stresses to which it will be subjected. While at least two interleaf layers are required, interleaf layers may be present between each layer of fiber resin matrix. To do so means minimal increase in size and weight of the tooling but produces significant increases in mechanical performance. As seen through reference to Example 1, it is preferred that the number of interleaf layers comprise about (n-1) of the total number of layers (n) of the heaviest layers of reinforcing fibers found in the tooling article. It should also be noted that different fiber orientations and/or fabrics can be used within the same tool.

## EXAMPLES

The following Examples are provided herein as illustrations of the present invention. Their presence should therefore not be construed as limitations upon the scope of the present invention. Unless expressly noted otherwise, all percentages expressed are weight percentages and all temperatures are in degrees Centrigrade.

## EXAMPLE 1

Laminate was prepared from eight plies of epoxy based 60°C curing tooling resin (marketed by

American Cyanamid Company under the designation 777) and a twill weave carbon fiber fabric marketed by American Cyanamid Company under the designation CP 200. The laminate also contained one ply of Upilex polyimide film having a thickness of about 20 microns which contained apertures of about 0.5 mm in size and numbering about 1 per square inch of interleaf. The interleaf film was located between plies 4 and 5 of the laminate. A 9 inch by 1 inch specimen of the laminate was prepared which included a 2 inch long section of release film to simulate a 2 inch long delamination between plies of the laminate. Hinges were attached to each side of the delaminated side of the specimen. The hinged laminate specimen was then pulled open through the application of various tensile loadings. A load of 28 Newtons was found necessary to initiate crack propagation through 5 inches of the laminate. The work done in opening this crack was measured as 5.6 in. $lb/in^2$ .

EXAMPLE 1A

(Comparative)

The laminate of Example 1 was prepared. However this laminate did not contain the interleaf film as in Example 1.

A load of only 19.9 Newtons was found necessary to initiate crack propagation through 5 inches of this laminate. The work done in propagating the crack was measured as 1.62 in. $lb/in^2$.

EXAMPLE 2

A laminate was prepared using 6 plies of the resin of Example 1 and a twill weave carbon fiber fabric marketed by American Cyanamid Company under the designation CP 650. The interleaf layer of Example 1 was also used. However, the interleaf layer was located between plies 3 and 4 of said laminate.

A crack in the laminate, size 6 inch x 1 inch, was simulated through the use of release film located within the laminate producing a crack of 1.25 inches in length. A flexural test was then conducted to measure the energy required to cause the induced crack to begin propagating. It was found that the application of a shear force in the amount of 6.6 inch $pound/inch^2$ was necessary to initiate crack propagation.

EXAMPLE 2B

(Comparative)

The laminate of Example 2 was utilized. However such laminate did not contain the interleaf layer as found in Example 2.

The test of Example 2 was conducted and it was found that the application of only 3.49 inch $pound/in^2$ was necessary to initiate crack propagation.

EXAMPLE 3

A ten ply laminate, size 6 inch x 4 inches, was produced from the epoxy of Example 1 and the twill weave carbon fiber fabrics known as CP 200 and CP 650. The CP 200 fabric composed plies 1 and 10 of the laminate with the balance of the plies being composed of the CP 650 fabric. All plies were placed in the $0^o$ orientation with the exception of plies 3, 4, 7 and 8 which were placed in the $45^o$ orientation. The interleaf layer of Example 1 was also present between plies 1, 2 and 9, 10.

A panel of this laminate was impacted in the center thereof with a force of 750 inch $pound/inch^2$. The panel was then subjected to a compression strength test wherein 22.6 KSI (1 KSI equals 1000 psi) was found necessary to cause failure of the panel.

EXAMPLE 3A

A laminate similar to that of Example 3 was produced, however, interleaf layers were present between all but plies 1,2 and 9, 10. Seven interleaf layers were therefore present in this laminate.

A panel of said laminate was tested in a fashion identical to that of that in Example 3 and it was found that a force of 32.5 ksi was required to cause failure of said panel.

EXAMPLE 3B

(Comparative)

The 10 ply laminate of Example 3 was produced. However, no interleaf layers was present therein.

A panel of said laminate was tested in accordance with the procedure outlined in Example 3. It was found that a force of only 20.9 ksi was required to produce failure of the panel.

EXAMPLE 4

Panels of the laminates of Examples 3, 3a and 3b (6 inches by 4 inches in size) were impacted at various energies through the use of a Boeing Impact Jig. On the reverse side of the impacted area, a circle of vac-seal tape was placed around the damage area. A Buchner funnel was affixed to this tape and vacuum pulled inside the funnel by a vacuum pump. Vacuum was monitored by a gauge connected to said funnel. When full vacuum was achieved, the vacuum pump was disconnected and vacuum fall off in inches of mercury per 5 minutes due to laminate porosity was recorded. These values are expressed as percentages of initial vacuum in Table 1. These vacuum retention readings are also repeated after thermal cycling between 180°C and room temperature.

In the sample containing no interleaf layers, the vacuum leakage readings increase quickly at first under thermal cycling and then levels out with only small increases between readings after 100 and 200 cycles. It can be readily seen that vacuum retention of the tool after impact is adversely affected by thermal cycling. In contrast, the two panels, containing 2 and 7 interleaf layers, respectively, retain full vacuum even after 250 cycles.

TABLE 1

| LAMINATE | IMPACT* LEVEL | INITIAL VACUUM RETENTION ( % ) | VACUUM RETENTION AFTER X CYCLES (%) | | | | | | | | | |
|---|---|---|---|---|---|---|---|---|---|---|---|---|
| | | | 1 | 5 | 10 | 25 | 50 | 75 | 100 | 200 | 300 | 1000 |
| A | 250 | 96.5 | 92 | — | 89.3 | 87.5 | — | — | 83.5 | 82.5 | 78 | 46 |
| B | 250 | 100 | 100 | 100 | 100 | 100 | 100 | 100 | 100 | 100 | 100 | 100 |
| C | 250 | 100 | 100 | 100 | 100 | 100 | 100 | 100 | 100 | 100 | 100 | 100 |
| A | 350 | 87.5 | 76.8 | — | 76.8 | 71.4 | — | 64.3 | — | 60.7 | 57.2 | 10.2 |
| B | 350 | 100 | 100 | 100 | 100 | 100 | 100 | 100 | 100 | 100 | 100 | 100 |
| C | 350 | 100 | 100 | — | 100 | 100 | 100 | 100 | 100 | 100 | 100 | 100 |
| A | 750 | 44 | 31.2 | — | 25 | 21.4 | — | 10.2 | — | 8.9 | 7.2 | 0 |
| B | 750 | 100 | 100 | 100 | 100 | 100 | 100 | 100 | 100 | 100 | 100 | 100 |
| C | 750 | 100 | 100 | 100 | 100 | 100 | 100 | 100 | 100 | 100 | 100 | 100 |

Laminate A is the laminate of Example 3B
Laminate B is the laminate of Example 3A
Laminate C is the laminate of Example 3

* in inch pounds/inch

## Claims

1. A composite molding tooling comprising
   (a) fiber-reinforced resin matrix layers, and

(b) at least one discrete interleaf layer interposed between two of said fiber-reinforced resin matrix layers.

**2.** The tooling of Claim 1 wherein said fiber-reinforced matrix layer comprises from about 40 to about 70% by weight of reinforcing filaments and about 30 to about 60% of weight of a thermosetting resin composition.

**3.** The tooling of Claim 2 wherein said reinforcing filaments are fibers selected from the group consisting of carbon fibers, graphite fibers, polyethylene fibers, aramid fibers, boron fibers, silicone carbide fibers, polyester fibers, glass fibers, polyamide fibers, rayon fibers, polybenzimidazole fibers, metal-coated graphite fibers and combinations thereof.

**4.** The tooling of Claim 2 wherein said reinforcing filaments are arranged in parellel or random directions.

**5.** The tooling of Claim 2 wherein said thermosetting resin composition comprises a matrix resin selected from the group consisting of epoxy resins, vinyl ester resins, polyimide resins, bis-maleimide resins, acetylene-terminated resins, cyanate ester resins, polyester resins and mixtures thereof.

**6.** The tooling of Claim 1 wherein said interleaf layer comprises a thermoplastic resin, a thermosetting resin or mixtures thereof.

**7.** The tooling of Claim 6 wherein said interleaf layer comprises a resin selected from the group consisting of thermoplastic and/or elastomer-modified epoxies, or thermoplastics such as polysulphones, polyacrylates, polyether sulphones, polyacrylates and polyimides.

**8.** The tooling of Claim 1 wherein said interleaf layer has a thickness ranging from about 5 to about 100 microns.

**9.** The tooling of Claim 8 wherein said interleaf layer has a thickness ranging from about 10 to about 50 microns.

**10.** The tooling of Claim 8 wherein said interleaf layer has a thickness ranging from about 10 to about 30.

**11.** The tooling of Claim 1 wherein said interleaf layer is semi-permeable.

**12.** The tooling of Claim 11 wherein said interleaf layer contains perforations in numbers ranging from 0 to about 10 per square inch of said interleaf layer.

**13.** The composite molding tooling of Claim 1 which has improved damage tolerance and/or resistance to microcracking during thermal cycling relative to tooling without interleaf layer (b).

**14.** A method of producing molded articles through the use of vacuum molding, autoclave molding, resin transfer molding or resin injection molding comprising the use therein of the tooling of Claim 1.